# EUROPEAN PATENT APPLICATION

(11) **EP 1 553 792 A2**
(43) Date of publication of application: **13.07.2005**
(21) Application number: 04030286.1
(22) Date of filing: 21.12.2004
(51) Int. Cl.: H04Q 7/32, H04L 29/08

(54) **Image digitization system, portable terminal unit, and character data delivery method**

(30) Priority: 07.01.2004 JP 2004001528
(71) Applicant: NEC CORPORATION, Tokyo (JP)
(72) Inventor: Yoshikawa, Ken, Tokyo (JP)
(74) Representative: VOSSIUS & PARTNER

(57) **Abstract**

An image digitization system is provided for implementing application software allowing a user to enjoy communication with other users using character data itself and for changing the character data, used by the application software, to increase gaming pleasure. In response to an instruction from the user, a portable terminal unit 1 downloads the application software from a data delivery server 4-1. When the application software is executed by an instruction from the user, the portable terminal unit 1 starts a camera to shoot an image and converts the shot image data to a numeric value according to a pre-set algorithm. The portable terminal unit 1 downloads character data, corresponding to the numeric data, from a data delivery server 4-1 and saves the downloaded character data.

## Description

The present invention relates to an image digitization system, a portable terminal unit, and a character data delivery method, and more particularly to application software that runs on a portable terminal unit using character data.

Recently, a portable terminal unit has the basic performance and the function that have improved significantly from those of a terminal unit a few years ago and, now, various types of application software can be run on the portable terminal unit.

Some of the application software described above use unique character data (for example, image data of characters used by the application software) and use the character data itself in the execution of a game by digitizing the character data, (for example, see Patent Document 1=JP-P2003-103049 A).

A portable terminal unit, now provided with short-range wireless means for an infrared ray and Bluetooth (registered trademark) communication, uses the short-range wireless communication means for easily communicating with other devices.

Character data used by the application software described above is fixed in many cases for each application program, and few application programs allow the user to carry out communication with other users using character data itself. Even if character data can be changed, the user has to set up the character change and, therefore, changing data does not give any gaming pleasure.

In view of the foregoing, it is an object of the present invention to provide an image digitization system, a portable terminal unit, and a character data delivery method that solve the problem described above, that implement application software allowing the user to use character data itself to find amusement in communication with other users, and that allow the user to change character data to increase their gaming pleasure.

An image digitization system according to the present invention comprises a data delivery server including an accumulation unit (i.e. memory unit) in which character data, which is used by application software running on a portable terminal unit, is accumulated,
wherein the portable terminal unit comprises a shooting unit for shooting an image; a converting unit for converting the shot image to a numeric value corresponding to character data; a downloading unit for downloading a character data, corresponding to the converted numeric value, from the data delivery server; and a memory in which the downloaded character data is saved.

A portable terminal unit according to the present invention comprises a shooting unit for shooting an image; a converting unit for converting the shot image to a numeric value corresponding to character data used by application software running in the portable terminal unit; a downloading unit for downloading character data, corresponding to the converted numeric value, from a data delivery server that includes an accumulation unit in which the character data is accumulated; and a memory in which the downloaded character data is saved.

A character data delivery method according to the present invention for use by a portable terminal unit comprises the steps of converting an image, shot by the portable terminal unit, into a numeric value corresponding to character data used by application software that runs on the portable terminal unit; downloading a character data, corresponding to the converted numeric value, from a data delivery server including an accumulation unit in which the character data is accumulated; and saving the downloaded character data in a memory.

That is, the image digitization system according to the present invention provides a method for diversifying character data used by application software and allowing a user to find a new use through the communication with other units.

The image digitization system according to the present invention converts image data, shot (photographed) by a (digital) camera contained in or external to the portable terminal unit, to a numeric value according to an appropriate algorithm, associates the numeric value with character data stored in a server, and delivers the character data from the server.

The image digitization system according to the present invention allows users to exchange character data between themselves. When character data is exchanged between the users, the existing data owned by one user is deleted and a new data owned by the other user is saved in the former user's portable terminal unit.

In this way, the image digitization system according to the present invention makes character data, which is used by the application software, diversified data that corresponds to a shot image. This makes the user feel as if the system was a game in which character data itself is used.

In addition, because character data is determined based on image data in the image digitization system according to the present invention, it is difficult to imitate the determined character data. Therefore, the application software in the image digitization system according to the present invention, designed with character data collection as one of purposes, increases the amount of communication with the servers to obtain the rare and valuable character data described above and, as a result, leads to an increase in the sales.

In addition, the image digitization system according to the present invention allows users to exchange character data among themselves. This operation increases the recognition of the application software and encourages users to get it.

The meritorious effects of the present invention are summarized as follows.
The image digitization system according to the present invention, which has the configuration and performs the operation as described below, has an effect of implementing application software that allows a user to enjoy communication with other users using character data itself as well as an effect of changing the character data of the application software to increase gaming pleasure or gaming nature.
Next, an embodiment of the present invention will be described with reference to the drawings.
FIG. 1 is a block diagram showing the configuration of an image digitization system in one embodiment of the present invention.
FIG. 2 is a block diagram showing an example of the arrangement of storage units in the data delivery server shown in FIG. 1.
FIG. 3 is a block diagram showing the internal configuration of the portable terminal unit shown in FIG. 1.
FIG. 4 is a sequence chart showing how the portable terminal unit shown in FIG. 1 downloads application software and character data.
FIG. 5 is a diagram showing how the portable terminal unit shown in FIG. 1 saves character data.
FIG. 6 is a sequence chart showing how the portable terminal units shown in FIG. 1 exchange character data.
FIG. 7 is a diagram showing how the screen changes when character data is exchanged on the portable terminal unit shown in FIG. 1.

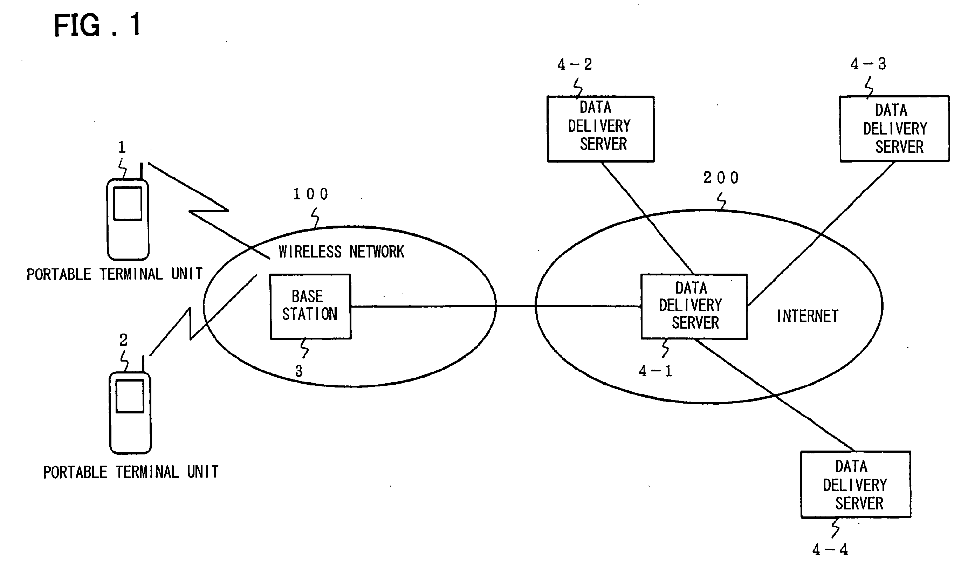

FIG. 1 is a block diagram showing the configuration of an image digitization system in one embodiment of the present invention. Referring to FIG. 1, the image digitization system in one embodiment of the present invention comprises portable terminal units 1 and 2, a wireless base station 3, data delivery servers 4-1 to 4-4, a wireless network 100, and the Internet 200.

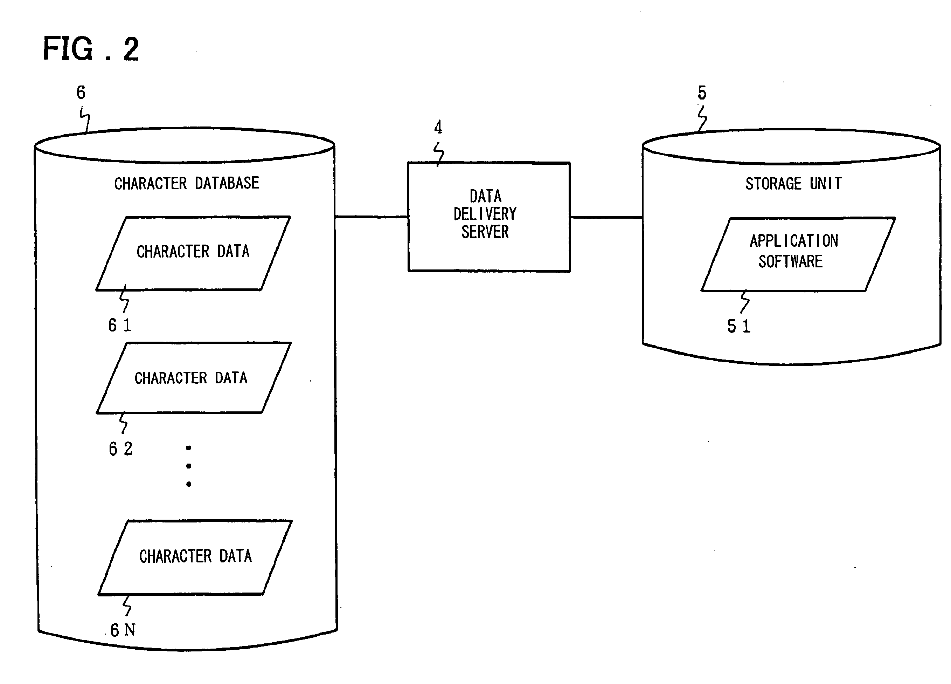

FIG. 2 is a block diagram showing an example of the arrangement of storage units and so on in each of the data delivery servers 4-1 to 4-4 shown in FIG. 1. Referring to FIG. 2, the data delivery server 4 has a storage unit (accumulation unit) 5 in which application software 51 is stored and a character database 6 in which character data 61 to 6N is accumulated.

The application software 51 comprises a mechanism for controlling a camera (not shown) for shooting an image, a mechanism for converting shot image data to a numeric value according to a specific algorithm, and a mechanism for managing character data 61 to 6N.

In this embodiment, the character data 61 to 6N contain the elements of the drawing image of a character. That is, the character data 61 to 6N is data representing the name and visual data by which the user identifies a character used by the application software 51. For example, when the software is collection type application software for collecting monsters appearing in a game, the character data is composed of the name of a monster, the appearance (image) of the monster, and so on. When the software is a program that delivers a calendar featuring idols, the character data is composed of the pictures of idols etc.

The application software 51 includes the function to display a list of character data 61 to 6N in the album format, the function to exchange character data with other terminals, and so on.

It is also possible to contain the storage unit 5 and the character database 6 in the data delivery server 4. The data delivery servers 4-1 to 4-4 are configured in the same manner as the data delivery server 4 described above. The description of the internal structure of the communication unit and the delivery unit of the data delivery server 4 is omitted here because they are well known.

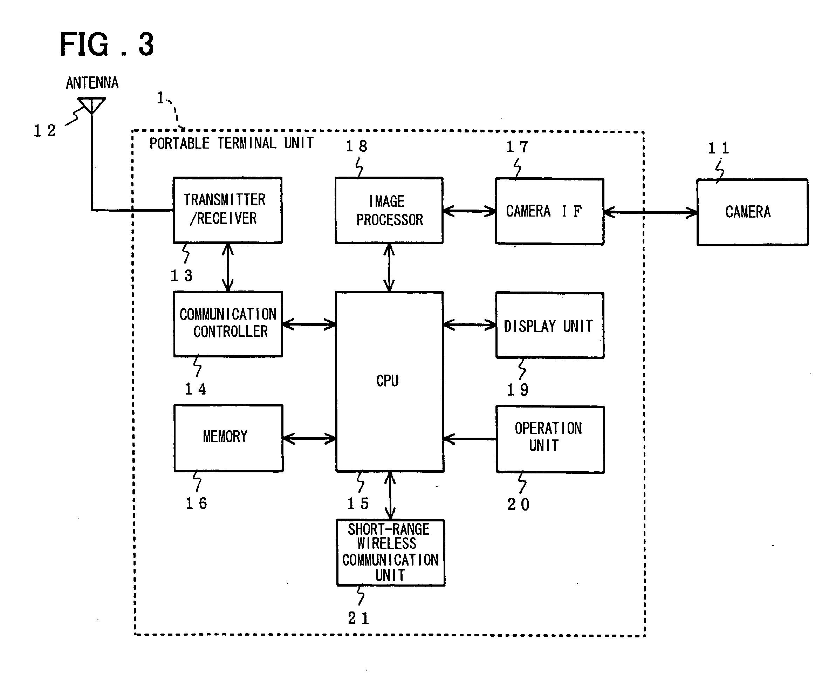

FIG. 3 is a block diagram showing the internal configuration of the portable terminal units 1 and 2 shown in FIG. 1. Referring to FIG. 3, the portable terminal unit 1 comprises an antenna 12, a transmitter/receiver 13 that modulates and demodulates signals, a communication controller 14 that controls communication, a CPU (central processing unit) 15 that controls display and user operations, a memory 16 in which transmission/reception data and programs are stored, a camera IF (interface) 17 that acts as an interface with a camera 11 connected externally, an image processor 18 that digitizes an image shot by the camera 11, a display unit 19 such as an LCD (Liquid Crystal Display), an operation unit 20 such as dial key switches operated by the user, and short-range wireless communication unit 21 for infrared ray communication or Bluetooth (registered trademark) communication.

The portable terminal unit 2 is configured in the same manner as the portable terminal unit 1 described above. The camera 11, though connected externally to the portable terminal unit 1 in the figure, may also be contained in the portable terminal unit 1.

The portable terminal units 1 and 2 are connected to the wireless base station 3 via the antenna 12, the transmitter/receiver 13, and the communication controller 14. The portable terminal unit downloads the application software 51 and the character data 61 to 6N from the data delivery servers 4-1 to 4-4 via the wireless network 100 and the Internet 200 and stores the application software 51 and the character data 61 to 6N into the memory 16.

This enables the CPU 15 of the portable terminal units 1 and 2 to read the application software 51 and the character data 61 to 6N from the memory 16 for execution. The portable terminal units 1 and 2 can communicate each other via the short-range wireless communication unit 21.

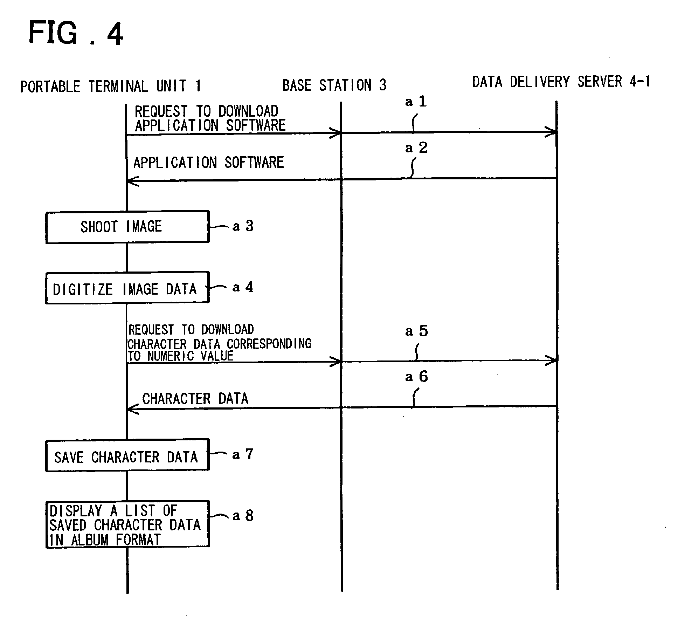

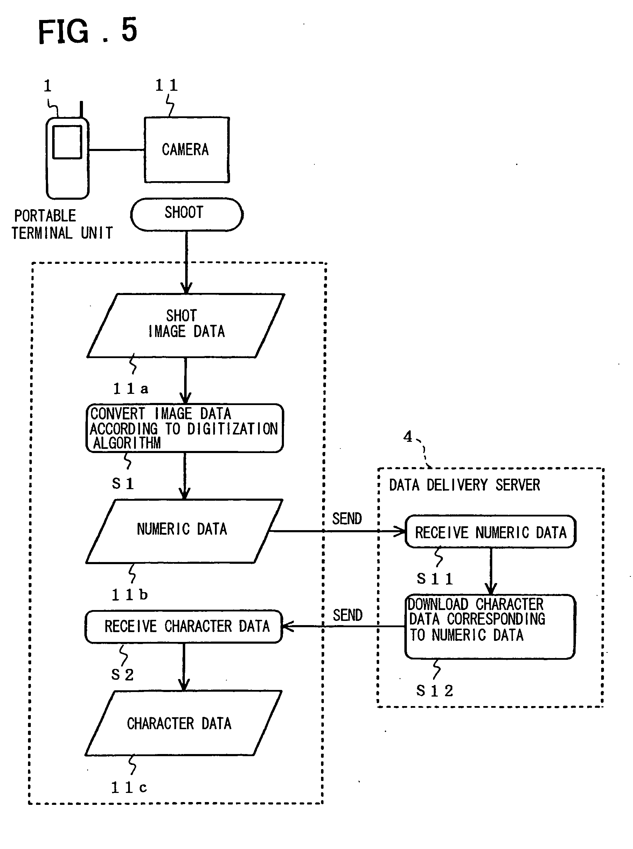

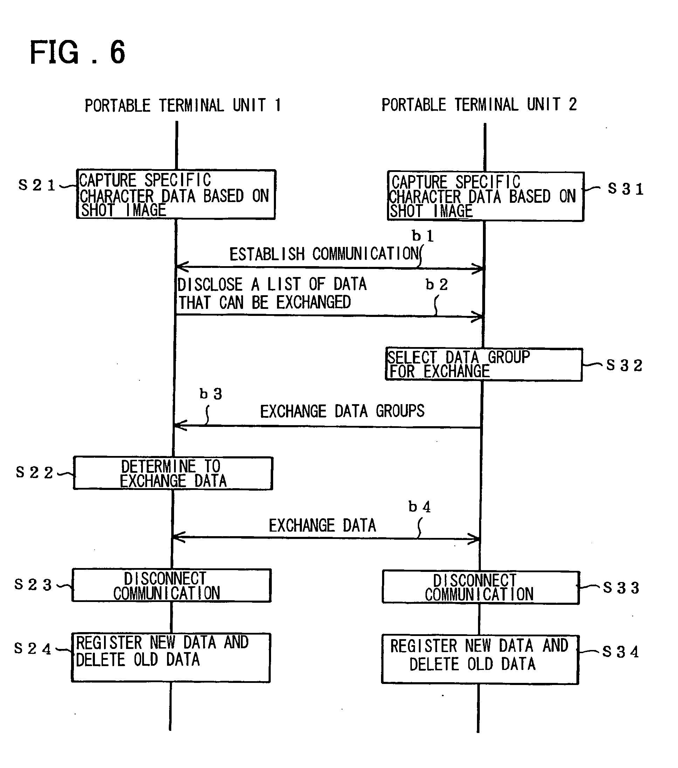

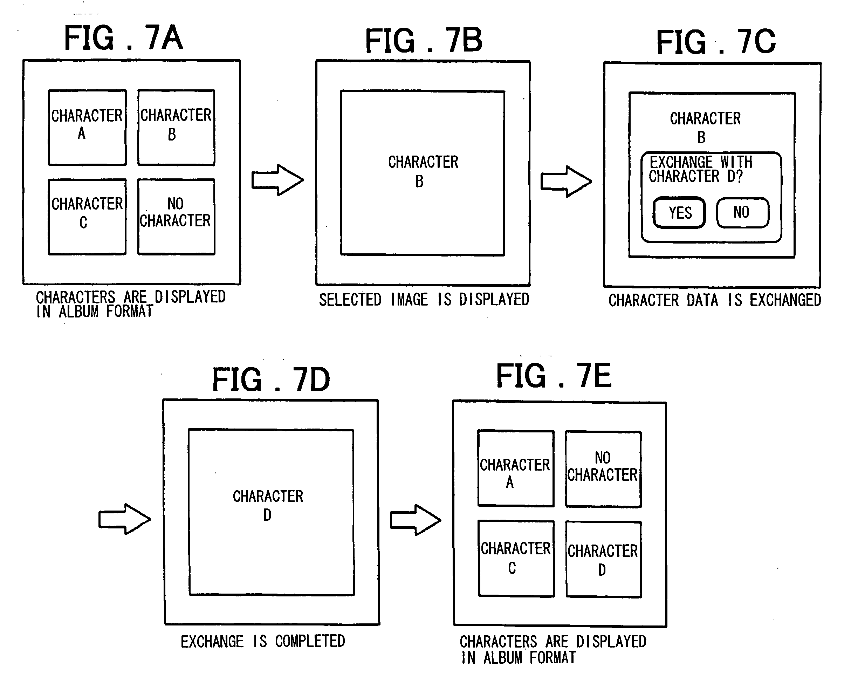

FIG. 4 is a sequence chart showing how the portable terminal unit 1 shown in FIG. 1 downloads the application software 51 and the character data 61 to 6N. FIG. 5 is a diagram showing how the portable terminal unit 1 shown in FIG. 1 saves the character data 61 to 6N. FIG. 6 is a sequence chart showing how the portable terminal units 1 and 2 shown in FIG. 1 exchange character data 61 to 6N between them. FIG. 7 is a diagram showing how the screen of the portable terminal unit 1 shown in FIG. 1 changes when the character data 61 to 6N in is exchanged. With reference to FIG. 1 to FIG. 7, the following describes the operation of the embodiment.

In response to an instruction from a user, the portable terminal unit 1 downloads the application software 51 from the data delivery server 4-1 via the wireless base station 3 and the wireless network 100 (a1 and a2 in FIG. 4).

After that, when the CPU 15 of the portable terminal unit 1 executes the application software 51 in response to an instruction from the user, the camera 11 is started via the camera IF 17 and the camera 11 shots an image (a3 in FIG. 4).

The CPU 15 executes the application software 51 and uses the image processor 18 to digitize shot image data 11a, composed of a plurality of bytes, into a numeric value from "0" to "255" according to a pre-set algorithm (a4 in FIG. 4 and step S1 in FIG. 5).

An example of the algorithm used in this processing is that the values of all bytes, each containing one of numeric values 0 to 255 corresponding to hexadecimal values 00 to FF, in the data are added up and the low-order one byte is obtained from the calculation result.

The CPU 15 executes the application software 51 and uses the antenna 12, the transmitter/receiver 13, and the communication controller 14 to download character data, corresponding to numeric data 11b, from the data delivery server 4-1 via the wireless base station 3 and the wireless network 100 (a5 and a6 in FIG. 4 and steps S11, S12, and S2 in FIG. 5). The CPU 15 then saves downloaded character data 11c into the memory 16 (a7 in FIG. 4, steps S21 and S31 in FIG. 6).

For example, when 16 types of character data are prepared as character data, each of the values "0" to "15" obtained based on the digitization algorithm is associated with one type of data, respectively. In this case, the numeric values need not correspond to character data on a one-to-one basis; instead, number of character data units may be reduced to establish an N-to-one correspondence. If there is a variation in the numeric values generated by the digitization algorithm, the correspondence becomes uneven. In such a case, when the value of N is large, it results in a case where a correspondence with some pieces of character data occurs less frequently.

In this embodiment, the data delivery servers 4-1 to 4-4 can deliver character data in the push-type mode if a numeric value, derived from the shot image data 11a, is registered in the data delivery servers 4-1 to 4-4. For example, a service that delivers calendars featuring idols can deliver character data, created by combining a picture corresponding to the registered numeric value with a schedule part, on a monthly, weekly, or even daily basis.

Another advantage is that a content provider can replace shots in the data delivery servers 4-1 to 4-4 any time the content provider wants. For example, when the season changes from summer to fall, the content provider can replace shots of idols in their summer dresses with shots of idols in their fall dresses and replace character data on summer dresses with character data on fall dresses. The only thing the data delivery servers 4-1 to 4-4 are required to do is to simply send character data corresponding to the numeric value.

The CPU 15 executes the application software 51 and uses the image processor 18 to display a list of character data 11c, which is saved in the memory 16, in the album format on the display unit 19 (a8 in FIG. 4). [See FIG. 7A]

The user exchanges an existing character data, saved in the portable terminal unit 1, with other user's (new) character data using the short-range wireless communication unit 21. The exchange operation refers to an operation in which a predetermined number of character data units are exchanged between the users. The existing character data used for the exchange is deleted from the user's portable terminal unit.

For example, characters A to C are displayed on the display unit 19 in the album format as shown in FIG. 7A. When character B is selected as shown in FIG. 7B, character B and character D (other user's character data) are exchanged [See FIG. 7C].

After the exchange of character data is finished, the screen of the display unit 19 changes to indicate that character D and character B have been exchanged as shown in FIG. 7D. After that, characters A, C, and D are displayed in the album format as shown in FIG. 7E.

The character data exchange processing described above is performed as follows. In a user's portable terminal unit 1 and the other user's portable terminal unit 2, specific character data is downloaded from the data delivery servers 4-1 to 4-4 based on an image shot by the camera 11 and the downloaded character data is captured into the memory 16 (steps S21 and S31 in FIG. 6).

The exchange operation is performed when the user of the portable terminal unit 1 and another user of the portable terminal unit 2 want to have any of the character data 61 to 6N that is owned, not by one of the users, but by the other user.

The portable terminal unit 1 and the portable terminal unit 2 use the short-range wireless communication unit 21 to establish communication between the terminals (b1 in FIG. 6). In response to an instruction from the user, the portable terminal unit 1 discloses, via communication, a list of character data that is stored in the terminal and that can be exchanged with the portable terminal unit 2 (b2 in FIG. 6).

The user of the portable terminal unit 2 selects a data group from its data owned by the terminal itself that can be exchanged with a data group included in the disclosed list and that the user of the portable terminal unit 2 wants to get (step S32 in FIG. 6). Then, the terminal 2 communicates with the portable terminal unit 1 to send an exchange data group list to the portable terminal unit 1 (b3 in FIG. 6).

If there is no data group that the user of the portable terminal unit 2 wants to get, the exchange of character data with the portable terminal unit 1 is terminated. The data group described above may be a subset or the total set of the list disclosed by the user.

On the other hand, the user of the portable terminal unit 1 compares the data that can be sent from the terminal itself with the data from the portable terminal unit 2 and, if no problem is found, determines to exchange the character data (step S22 in FIG. 6). Once the exchange of data is determined, the character data is exchanged between the portable terminal unit 1 and the portable terminal unit 2 (b4 in FIG. 6). In this case, the application software 51 is executed by the CPU 15 to exchange the character data.

When all data transmissions are completed, the portable terminal unit 1 and the portable terminal unit 2 disconnect communication (steps S23 and S33 in FIG. 6), register the new data, and delete the old data (steps S24 and S34 in FIG. 6).

The user of the portable terminal unit 1 operates the portable terminal unit 1 to download character data from the data delivery servers 4-1 to 4-4 or exchange character data with other users to collect all the desired types (e.g., 256 types) of character data. In this way, the purpose of the application software 51 is accomplished by collecting character data.

In this embodiment, various types of character data corresponding to shot images are used for the application software 51 as described above. This makes the user feel as if the system was a game in which character data itself is used.

In addition, it is difficult to imitate character data in this embodiment because character data is determined based on image data. Therefore, the application software 51, designed with character data collection as one of purposes, communicates with the data delivery servers 4-1 to 4-4 frequently to obtain rare and valuable character data. An increase in the communication amount leads to an increase in the sales of operators that manage and sell the application software 51 and the character data 61 to 6N.

In addition, this embodiment, which allows users to exchange character data 61 to 6N among themselves, increases the recognition of the application software 51 and encourages users, incentive to get it.

Therefore, the relation between numeric values and character data is one to one or N to 1 in this embodiment and, once the numeric value is determined, the character data is determined uniquely. This is very convenient for a character data exchange among users who use collection-type application software.

In this embodiment, character data derived from an image shot by the portable terminal unit, on which the application software described above is executed, can be obtained any number of times as long as the data is stored in the data delivery server or the shot data is stored in the terminal. In this embodiment, this capability allows the user to exchange character data, derived from an image shot by the terminal, without worrying about the number of remaining number of data pieces.

Although 256 types of character data are used in the system according to the present invention, there is no need to limit the number of data pieces. Multiple copies of the same character data may also be stored.

The conversion from an image to a numeric value used in the system according to the present invention, if biased, could generate character data that is difficult to obtain. The character data is not only a drawing image but may be any information unique to the application software. For example, application software such as a fighting game may include a value representing the ability or the like of a character appearing in the game.

In addition, the algorithm for digitizing image data used in the present invention need not be a fixed method such as the one described above but may be a method that varies or differs according to application software from one to another.
It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.

## Claims

1. An image digitization system comprising a data delivery server including a storage unit in which character data, which is used by application software running on a portable terminal unit, is accumulated,
wherein said portable terminal unit comprises:
a shooting unit for shooting an image;
a converting unit for converting the shot image to a numeric value corresponding to character data;
a downloading unit for downloading a character data, corresponding to the converted numeric value, from said data delivery server; and
a memory in which the downloaded character data is saved.

2. The image digitization system as defined by claim 1,
wherein said portable terminal unit further comprises short-range communication unit for carrying out data communication with some other portable terminal unit, and
character data saved in each of said portable terminal unit and said other portable terminal unit is exchanged using said short-range communication unit.

3. The image digitization system as defined by claim 2, wherein, when the character data is exchanged, an existing data saved in each of said portable terminal unit and said other portable terminal unit is deleted and a new character data received from the portable terminal unit, with which the existing character data is exchanged, is saved in each of said portable terminal unit and said other portable terminal unit.

4. A portable terminal unit comprising:
a camera for shooting an image;
means for converting the shot image to a numeric value corresponding to character data used by application software running in said portable terminal unit;
means for downloading character data, corresponding to the converted numeric value, from a data delivery server that includes a storage unit in which the character data is accumulated; and
a memory in which the downloaded character data is saved.

5. The portable terminal unit as defined by claim 4, further comprising a short-range communication unit for communicating data with some other portable terminal unit, wherein said short-range communication unit is used to exchange character data saved in each of said portable terminal unit and said other portable terminal unit.

6. The portable terminal unit as defined by claim 5, wherein, when the character data is exchanged, an existing character data saved in each of said portable terminal unit and said other portable terminal unit is deleted and a new character data received from the portable terminal unit, with which the existing character data is exchanged, is saved in each of said portable terminal unit and said other portable terminal unit.

7. A character data delivery method for use by a portable terminal unit, comprising the steps of:
converting an image, shot by a portable terminal unit, into a numeric value corresponding to character data used by application software that runs on said portable terminal unit;
downloading a character data, corresponding to the converted numeric value, from a data delivery server including a storage unit in which the character data is accumulated; and
saving the downloaded character data in a memory.

8. The character data delivery method for use by a portable terminal unit as defined by claim 7, further comprising the step of:
exchanging an existing character data, saved in each of said portable terminal unit and some other portable terminal unit, using a short-range communication unit for communicating data with said other portable terminal unit.

9. The character data delivery method as defined by claim 8 wherein, when character data is exchanged, an existing character data saved in each of said portable terminal unit and said other portable terminal unit is deleted and a new character data received from the portable terminal unit, with which the existing character data is exchanged, is saved in each of said portable terminal unit and said other portable terminal unit.
